# EUROPEAN PATENT APPLICATION

(11) **EP 2 484 683 A2**
(43) Date of publication of application: **08.08.2012**
(21) Application number: 10813916.3
(22) Date of filing: 31.08.2010
(51) Int. Cl.: C07F 7/22, C08G 63/85, B01J 31/12, C08G 63/08

(54) **ORGANOTIN COMPOUND, METHOD FOR PREPARING SAME, AND METHOD FOR PREPARING POLYLACTIDE USING SAME**

(30) Priority: 02.09.2009 KR 20090082678; 02.09.2009 KR 20090082679; 19.08.2010 KR 20100080176
(71) Applicant: LG Chem, Ltd., Youngdungpo-gu Seoul 150-721 (KR)
(72) Inventor: LEE, In-Su, Daejeon 305-755 (KR); YOON, Sung-Cheol, Daejeon 305-509 (KR); PARK, Seung-Young, Daejeon 305-380 (KR); KIM, Seong-Woo, Daejeon 305-340 (KR); DO, Young-Kyu, Daejeon 305-338 (KR); LEE, Kang-Mun, Daejeon 305-338 (KR)
(74) Representative: Goddar, Heinz J.
(86) International application number: PCT/KR2010/005887
(87) International publication number: WO 2011/028007

(57) **Abstract**

The present invention relates to an organotin compound represented by R₁O-Sn-OR₂ (where R₁ and R₂ are independently a primary, secondary, or tertiary alkyl group having 5 to 30 carbon atoms), a preparation method thereof, and a preparation method for polylactide using the organotin compound. The organotin compound of the present invention is easy to prepare and is used to prepare a polylactide resin having a high molecular weight at a high yield without using a separate initiator.

## Description

### TECHNICAL FIELD

The present invention relates to a novel organotin compound, a preparation method thereof, and a preparation method for polylactide using the organotin compound.

### BACKGROUND OF THE INVENTION

Tin compounds are defined as compounds containing the chemical element tin (Sn), and are classified into organotin compounds, stannates, and tin minerals including tin.

Among the organotin compounds, tetrabutyltin compounds have a very stable structure and have low toxicity and are biologically inactive, and they are as the starting material for di- and tributyltin compounds or related catalysts. Tributyltin oxide is chiefly used as a wood preservative. Vinyl-tin compounds in which one of the carbon atoms of the vinyl moiety is bonded to a nitrogen atom are known to be useful as insecticides (U.S. Patent No. 4,504,488, 1985). Triphenyltin acetate, triphenyltin chloride, and triphenyltin hydroxide are also used as insecticides, germicides, or fungicides (U.S. Patent No. 6,270,810, 2001), and azocyclotin and cyhexatin are used as pesticides to control mites or spiders (U.S. patent No. 7,205,298, 2007) or as an agent for preventing discoloration of polymer resins (U.S. Patent No. 4,701,486, 1987). As such, the organotin compounds are available in a wide range of applications, and many studies have been actively undertaken to develop a novel organotin compound.

Polylactide or poly(lactic acid) is a kind of resin containing a repeating unit represented by the following general formula. Unlike the conventional petroleum-based resins, the polylactide resins which are based on biomass feature eco-friendliness such as being recyclable and biodegradable with water and microorganisms in a landfill, generating less greenhouse gas, CO₂, and they also have adequate mechanical strength equivalent to those of the petroleum-based resins.

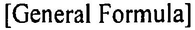

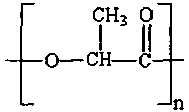

The polylactide resins have been used for disposable wraps/containers, coatings, foams, films/sheets, and fibers. In recent years, there have been attempts to use the polylactide resins for semipermanent purposes as exterior materials for cellular phones or interior materials for automobiles as a mixture with an existing resin such as ABS, polycarbonate, or polypropylene for reinforcement of properties. However, the polylactide resins tend to biodegrade in the presence of factors such as the catalyst used in their preparation or water contained in the air, and such a drawback of their own properties still remains to limit the range of their application.

Accordingly, there is an urgent demand for developing a catalyst to enable preparation of polylactide resins having a high molecular weight with high yield. The inventors of the present invention have been attempting to develop such a catalyst for preparation of polylactide resin and completed the present invention.

### DETAILED DESCRIPTION OF THE INVENTION

### TECHNICAL OBJECTIVES

It is therefore an object of the present invention to provide a novel organotin compound that is useful as a catalyst for ring-opening polymerization of a cyclic ester compound, a preparation method thereof, and a preparation method for polylactide using the same.

### TECHNICAL SOLUTION

The present invention provides an organotin compound represented by the following Formula I. Further, the present invention provides a method for preparing an organotin compound that includes: reacting a tin(II) salt with a primary, secondary, or tertiary alcohol having 5 to 30 carbon atoms to form an organotin compound represented by the following Formula 1.

R₁O-Sn-OR₂ [Formula I]

In Formula 1, R₁ and R₂ are independently a primary, secondary, or tertiary alkyl group having 5 to 30 carbon atoms.

Further, the present invention provides a method for preparing an organotin compound that includes: (a) reacting a tin(II) salt with a primary, secondary, or tertiary alcohol having 1 to 12 carbon atoms to form an intermediate of tin(II) alkoxide; and (b) reacting the intermediate of tin(II) alkoxide with a primary, secondary, or tertiary alcohol having 5 to 30 carbon atoms to form an organotin compound represented by Formula I .

In the preparation method, the step (b) of reacting an intermediate of tin(II) alkoxide with a primary, secondary, or tertiary alcohol having 5 to 30 carbon atoms is conducted in an at least one-step reaction process.

Further, the present invention provides a method for preparing a polylactide resin that includes polymerizing a lactide monomer by ring-opening polymerization in the presence of an organotin compound represented by Formula 1 as a catalyst.

Hereinafter, a detailed description will be given as to an organotin compound, a preparation method thereof, and a preparation method for a polylactide resin using the organotin compound according to embodiments of the present invention.

Unless otherwise stated, the terms "includes", "comprises", "including", and/or "comprising" as used herein specify including stated elements (and/or components) without any limitation, and should not be construed as excluding addition of other elements (and/or components).

The term "cyclic ester compound" as used herein refers to a cyclic hydrocarbon compound including at least one ester group. The term "lactide monomer" as used herein may be defined as follows. Typically, lactides are classified into L-lactide formed from L-lactic acid, D-lactide from D-lactic acid, and meso-lactide from an L-form and a D-form. Also, a 50:50 mixture of L-lactide and D-lactide is referred to as D,L-lactide or rac-lactide. Among these lactides, using either L-lactide or D-lactide with high optical purity in polymerization is known to yield L- or D-polylactide (PLLA or PDLA) with high stereoregularity. Such an L- or D-polylactide has a high crystallization rate and a high degree of crystallization relative to polylactides with low optical purity. But, the term "lactide monomer" as used herein is defined to include all types of lactides regardless of the difference in characteristics among the lactides depending on their types and the difference in characteristics among the polylactides formed from the lactides.

The term "polylactide resin" as used herein comprehensively refers to a homopolymer or copolymer including a repeating unit represented by the following general formula. Such a "polylactide resin" may be prepared in a step of forming the following repeating unit by ring-opening polymerization of the aforementioned "lactide monomer". The polymer obtained after completion of the ring-opening polymerization and formation of the following repeating unit is referred to as the "polylactide resin". As stated above, the category of the "lactide monomer" includes any type of lactides.

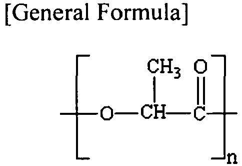

The category of the polymer that can be referred to as the "polylactide resin" may include all polymers in any state as obtained after completion of ring-opening polymerization and formation of the repeating unit, such as, for example, unpurified or purified polymers after completion of the ring-opening polymerization, the polymers contained in a liquid or solid resin composition prior to being molded, or the polymers contained in plastics or woven materials after being molded. In the entire specification, the properties of the "polylactide resin" (e.g., acidity, weight average molecular weight, the amount of the catalyst residue, etc.) may be defined as the properties of the polymer in any state as obtained after completion of the ring-opening polymerization and formation of the repeating unit.

The term "polylactide resin composition" as used herein refers to any composition prior to or after being molded that includes the "polylactide resin" or is prepared from the "polylactide resin". The category of the composition that can be referred to as the "polylactide resin composition" includes plastics or woven materials after being molded, as well as a liquid or solid resin composition in the form of a master batch or a pellet before being molded.

The inventors of the present invention have been repeatedly studying the synthesis of a novel organotin compound that is easy to prepare and is useful as a catalyst for ring-opening polymerization of cyclic esters to complete the present invention.

In accordance with one embodiment of the present invention, there is provided an organotin compound which is of a structure represented by the following Formula I :

R₁O-Sn-OR₂ [Formula I]

In Formula 1, R₁ and R₂ are independently a primary, secondary, or tertiary alkyl group having 5 to 30 carbon atoms.

When used as a catalyst for polymerization of polymers, the organotin compound is generally used in combination with a separate initiator, which is used to activate the catalyst in the polymerization reaction and thus accelerate the reaction rate. Therefore, the catalyst which is in an activated state in itself is not required to have either a separate initiator for the polymerization reaction or an initialization time to activate for catalytic activation, thereby providing a higher initial polymerization rate.

As substantiated by the following examples, the organotin compound according to the embodiment of the present invention can be used for ring-opening polymerization of a lactide monomer into a polylactide resin to enhance the yield of the polymerization reaction without using a separate initiator and hence to produce the polymer product with high molecular weight.

In particular, the organotin compound according to the embodiment of the present invention includes an alkoxyl group having 5 to 30 carbon atoms. When the number of carbon atoms contained in the alkoxyl group is at least 5, the solubility in different organic solvents can be relatively high due to the hydrophobicity of the alkyl group and the nonpolarity pertaining to the symmetric structure of the organotin compound. Also, the organotin compound in the alkoxy form can be used to activate a polymerization reaction without a separate initiator. With an increase in the number of carbon atoms of the organotin compound in the 2- to 4-coordinated forms after synthesis, the -OR substituent as an active species is more exposed outwardly due to increased steric hindrance. Thus, using the organotin compound with at least 5 carbon atoms results in production of polymers having a higher molecular weight with a higher polymerization yield than using a tin(II) alkoxide having less than 5 carbon atoms.

Therefore, the novel organotin compound according to the embodiment of the present invention can be used as a catalyst in a reaction for preparing a polymer resin from a cyclic ester compound by ring-opening polymerization.

In the organotin compound represented by Formula I , the R₁ and R₂ are independently a primary, secondary, or tertiary alkyl group having 5 to 30 carbon atoms and may be used without any specific limitation in its construction. In consideration of the ease of preparation, it is preferable that the R₁ and R₂ of Formula 1 are the same as each other, and can be C₆H₁₃, C₈H₁₇. or C₁₂H₂₅. More specifically, the organotin compound may be Sn(O(CH₂)₅CH₃)₂ [tin(II) hexoxide], Sn(O(CH₂)₇CH₃)₂ [tin(II) octoxide], or Sn(O(CH₂)₁₁CH₃)₂ [tin(II) dodecoxide].

As stated above, the organotin compound can be used as a catalyst in a ring-opening polymerization reaction of a cyclic ester compound, which may be any cyclic hydrocarbon compound including at least one ester group as defined above, and may not be specifically limited in construction.

More specifically, the cyclic ester compound may be any one selected from the group consisting of compounds represented by the following Formulas I or II:

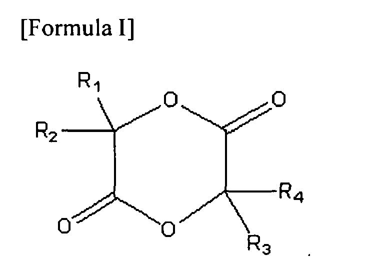

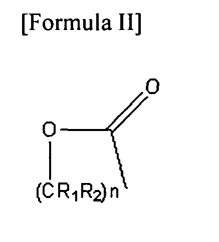

In the above Formulas I and II, each of R₁, R₂, R₃, and R₄ is the same or different, and is hydrogen or a linear or branched alkyl, alkenyl, or alkynyl having 1 to 12 carbon atoms.

Here, each of R₁, R₂, R₃, and R₄ may be independently further substituted with a substituent selected from the group consisting of a halogen, a hydroxyl group, a formyl group, an acyl group, a carboxylic group, and an amino group. In Formula II, n is an integer of 2 to 12.

Specific examples of the cyclic ester compound include, but are not limited to, caprolactone, lactide, and glycolide.

Preferably, the organotin compound according to the embodiment of the present invention may be used as a catalyst in a reaction for preparing a polylactide resin from a lactide monomer by ring-opening polymerization. The inventors of the present invention found out that using the organotin compound according to the embodiment of the present invention as a catalyst in a reaction for preparing a polylactide resin from a lactide monomer by ring-opening polymerization can achieve a higher polymerization yield than using the conventional organotin compounds.

A chain reaction takes place due to the presence of water, alcohol, or acid during the polymerization reaction using a tin(II) 2-ethylhexanoate (hereinafter referred to as "Sn-(Oct)₂") which is a representative Lewis acid catalyst conventionally used for ring-opening polymerization of a lactide monomer. This acid-associated chain transfer reaction interrupts the polymerization reaction or turns the activated catalyst (Sn-(Oct)₂) back to an inactivated form. As a result, the polylactide resin thus obtained may be produced with a lower molecular weight at a lower polymerization rate.

The ring-opening polymerization reaction of lactide using the Sn(Oct)₂ catalyst makes it difficult to form a polylactide resin having a high molecular weight at a high production yield because of depolymerization, and moreover causes degradation of the polylactide resin due to the presence of a monomer or catalyst residue even during the use of the polylactide resin, thereby providing poor properties such as hydrolysis resistance or heat resistance.

It is also revealed that using the organotin compound according to the embodiment of the present invention as a catalyst in ring-opening polymerization of a lactide results in production of the polylactide resin with high molecular weight in a high polymerization yield relative to using a known conventional catalyst.

In accordance with another embodiment of the present invention, a method for preparing the organotin compound is provided.

The method for preparing an organotin compound according to the embodiment of the present invention includes reacting a tin(II) salt with a primary, secondary, or tertiary alcohol having 5 to 30 carbon atoms to form an organotin compound represented by the following Formula 1:

R₁O-Sn-OR₂ [Formula 1]

In Formula 1, R₁ and R₂ are independently a primary, secondary, or tertiary alkyl group having 5 to 30 carbon atoms.

In accordance with another embodiment of the present invention, there is provided a method for preparing an organotin compound that includes: (a) reacting a tin(II) salt with a primary, secondary, or tertiary alcohol having 1 to 12 carbon atoms to form an intermediate of tin(II) alkoxide; and (b) reacting the intermediate of tin(II) alkoxide with a primary, secondary, or tertiary alcohol having 5 to 30 carbon atoms to form an organotin compound represented by the following Formula 1:

R₁O-Sn-OR₂ [Formula 1]

In Formula 1, R₁ and R₂ are independently a primary, secondary, or tertiary alkyl group having 5 to 30 carbon atoms.

The resultant organotin compound can be produced with high efficiency when the preparation method involves reacting a tin(II) salt with a primary, secondary, or tertiary alcohol having 1 to 12 carbon atoms to form an intermediate of tin(II) alkoxide and then reacting the intermediate of tin(II) alkoxide with an alcohol to form an organotin compound. Preferably, the primary, secondary, or tertiary alcohol having 1 to 12 carbon atoms reacted with the tin(II) salt may be alcohols that are readily available, including, but not limited to, methanol, butanol, and propanol.

The step of reacting an intermediate of tin(II) alkoxide with a primary, secondary, or tertiary alcohol having 5 to 30 carbon atoms according to the embodiment may be conducted in an at least one-step process.

For example, an intermediate (i.e., a primary intermediate) of tin(II) alkoxide obtained by a reaction between a tin(II) salt and a primary, secondary, or tertiary alcohol having 1 to 12 carbon atoms is reacted with a primary, secondary, or tertiary alcohol having 5 to 30 carbon atoms to yield different intermediates (i.e., secondary intermediates) of tin(II) alkoxide depending on the number of carbon atoms in the alcohol used in the reaction. The intermediates (i.e., secondary intermediates) of tin(II) alkoxide may also react with the alcohol to form other intermediates (i.e., tertiary intermediates) of tin(II) alkoxide.

In this manner, different intermediates of tin(II) alkoxide are formed depending on the number of carbon atoms of the alcohols used in the multi-step reaction. To yield an organotin compound represented by Formula 1 and containing a desired number of carbon atoms, it is only needed to adjust the number of carbon atoms of the alcohol that participates in the final step of the reaction. In other words, the intermediate of tin(II) alkoxide in the final step of the reaction can be reacted with a primary, secondary, or tertiary alcohol having 10 carbon atoms in order to yield a desired organotin compound of Formula 1 where the R₁ and R₂ are an alkyl group having 10 carbon atoms; or with a primary, secondary, or tertiary alcohol having 15 carbon atoms to form a desired organotin compound of Formula 1 where the R₁ and R₂ are an alkyl group having 15 carbon atoms.

In the preparation methods for organotin compound according to the embodiments of the present invention, the tin(II) salt can be selected without any limitation. More specifically, the tin(II) salt may include, if not limited to, SnC1₂, SnBr₂, SnI₂, or SnSO₄.

In the preparation methods for organotin compound according to the embodiments of the present invention, the step of reacting the tin(II) salt with a primary, secondary, or tertiary alcohol having 5 to 30 carbon atoms, or the step of reacting the tin(II) salt with a primary, secondary, or tertiary alcohol having 1 to 12 carbon atoms to form an intermediate of tin(II) alkoxide, may be conducted in the presence of a base. Using a base in the reaction between the tin(II) salt with a primary, secondary, or tertiary alcohol having 5 to 30 carbon atoms or a primary, secondary or tertiary alcohol having 1 to 12 carbon atoms can accelerate the reaction rate up to several minutes at room temperature to enhance the reaction efficiency and facilitate isolation or removal of the base residue from the intermediate of the tin(II) alkoxide or the final organotin compound under vacuum. The base as used herein may include, if not limited to, at least one selected from the group consisting of triethylamine, diethylamine, isopropylamine, tributylamine, and ammonia.

In the step of reacting the tin(II) salt with a primary, secondary, or tertiary alcohol having 1 to 12 carbon atoms in the presence of a base to form an intermediate of tin(II) alkoxide, or reacting the tin(II) salt with a primary, secondary, or tertiary alcohol having 5 to 30 carbon atoms in the presence of a base to form an organotin compound represented by Formula I , the used amount of the base may be, if not limited to, preferably 2 to 10 moles, more preferably 2 to 5 moles, and most preferably 2.2 to 2.5 moles with respect to one mole of the tin(II) salt, in consideration of accelerated reaction rate, enhanced reaction efficiency, and economic aspects.

Of the two preparation methods for an organotin compound according to the embodiments of the present invention, the preparation method where the tin(II) salt is directed reacted with a primary, secondary, or tertiary alcohol having 5 to 30 carbon atoms to form an organotin compound of Formula 1 involves a direct reaction of the tin(II) salt in an alcohol solvent having a desired number of carbon atoms to be substituted, without conversion of the tin(II) salt to an intermediate of tin(II) alkoxide, so that the final product does not contain even a trace of the intermediate of tin(II) alkoxide other than the desired organotin compound.

In the method for preparing an organotin compound by directly reacting a tin(II) salt with an alcohol in a one-step process, the reactants are, for example, tin(II) salt and 1-hexanol to yield tin(II) hexoxide as a desired organotin compound; tin(II) salt and I-octanol to form tin(II) octoxide; or tin(II) salt and 1-dodecanol to form tin(II) dodecoxide.

The preparation method that involves a direct reaction between a tin(II) salt and a primary, secondary, or tertiary alcohol having 5 to 30 carbon atoms has advantages in the aspects of reaction efficiency and enhanced economy due to the reduced number of steps of the reaction, over the preparation method that includes forming an intermediate of tin(II) alkoxide.

In the above-stated embodiments of the present invention, the number of carbon atoms in the alkoxy group of the organotin compound represented by Formula I is determined by the type of the primary, secondary, or tertiary alcohol having 5 to 30 carbon atoms which reacts with a tin(II) or an intermediate of tin(II) alkoxide.

Taking ease of preparation into consideration, the alcohol may be selected from hexanol, octanol, and dodecanol, which are used to produce organotin compounds, such as Sn(O(CH₂)₅CH₃)₂ [tin(II) hexoxide], Sn(O(CH₂)₇CH₃)₂ [tin(II) octoxide], and Sn(O(CH2)₁₁CH3)₂ [tin(II) dodecoxide], respectively.

In accordance with another embodiment of the present invention, a method for preparing a polylactide resin using the organotin compound as a catalyst is provided. More specifically, the preparation method includes polymerizing a lactide monomer by ring-opening polymerization in the presence of an organotin compound of Formula I as a catalyst. Conducting ring-opening polymerization of a lactide monomer using an organometallic catalyst of Formula 1 can avoid acid formation during the polymerization reaction, preventing a drop of the polymerization rate or a decrease in the molecular weight of the polymer product, and thereby produces a polylactide resin with a high molecular weight at a high yield.

In regard to using the organometallic catalyst according to one embodiment of the present invention that includes an alkoxy group having at least 5 carbon atoms, the resultant organotin compound in the 2- to 4-coordinated form may have increased steric hindrance with an increase in the number of carbon atoms, increasing the tendency to have a structure in which the active species, -OR substituents, are exposed outwardly. Thus, the use of such an organometallic catalyst results in production of the polymer with a far higher molecular weight in a higher polymerization yield than the use oftin(II) alkoxide having less than 5 carbon atoms.

The amount of the organometallic catalyst used is not specifically limited and may be preferably about 0.0001 to 1.0 mole, more preferably about 0.0005 to 0.1 mole, and most preferably about 0.001 to 0.01 mole with respect to 100 moles of the lactide monomer. The use of less organometallic catalyst fails to sufficiently activate the polymerization reaction, while an excess of the organometallic catalyst increases the catalyst residue in the polylactide resin product, causing degradation of the resin, reduction of the molecular weight of the resin, or discoloration of the resin during the processing step.

The catalyst used in the preparation method for polylactide resin may be selected as any tin(II) alkoxide catalyst represented by Formula 1 without any limitation, preferably including Sn(O(CH₂)₅CH₃)₂, Sn(O(CH₂)₇CH₃)₂, or Sn(O(CHZ)₁₁CH₃)₂. Such tin(II) alkoxides are easy to prepare and handle and are used to achieve a high polymerization yield, particularly in preparation of polylactides.

The ring-opening polymerization of lactide monomers may be conducted as bulk polymerization or solution polymerization, which are both acceptable in the preparation of polylactides according to the embodiment of the present invention.

The term "bulk polymerization" as used herein is defined as a polymerization reaction substantially not using a solvent, which inclusively means using a small amount of solvent for dissolving the catalyst, such as, for example, less than 1 ml of solvent per 1 Kg of the lactide monomer. When the ring-opening polymerization is bulk polymerization, the step of removing the solvent residue after polymerization can be omitted, thereby avoiding a degradation or loss of the resin possibly occurring in the solvent removing step.

When the ring-opening polymerization is solution polymerization, the solvent can be selected without any limitation as long as it can dissolve the lactide monomer and the organometallic catalyst. More specifically, the solvent may include, if not limited to, toluene, xylene, chloroform, dimethyl chloride, diphenyl ether, tetrahydrofurane, or a mixture of at least two of these solvents. The solution polymerization is advantageous in that the viscosity of the polymer solution can be maintained low to make the polymer solution miscible during the polymerization reaction and readily transferable after the polymerization reaction.

On the other hand, the lactide monomer may be prepared from lactic acid. Such a lactide monomer may be any type of lactide, such as, for example, L,L-lactide, D,L-lactide, or D,D-lactide.

The ring-opening polymerization of the lactide monomer may be conducted at a temperature of about 120 to 220 °C, preferably about 150 to 220 °C, and more preferably 170 to 200 °C. Under the temperature condition, the polymerization time may be defined as, if not limited to, 0.5 to 48.0 hours, preferably 1.0 to 10.0 hours, more preferably about 2.0 to 6.0 hours. The polymerization efficiency and the catalytic activity can be best optimized under the above-defined temperature and time conditions. Preferably, the preparation method uses a catalyst with high catalytic activity to secure production of a polylactide resin having a higher molecular weight than has ever been achieved in the prior art, at a high conversion rate and high yield, and to avoid acid formation during the polymerization reaction, reducing a potential depolymerization or degradation of the resin.

In accordance with another embodiment of the present invention, there is provided a polylactide resin prepared by the above-stated preparation method. The resultant polylactide resin has a high molecular weight, and more specifically, a weight average molecular weight of about 100,000 to 1,000,000. Also, the polylactide resin prepared using the catalyst has acidity of less than about 50 meq/kg, preferably less than about 30 meq/kg, and more preferably less than about 10 meq/kg.

In accordance with still another embodiment of the present invention, a polylactide resin composition including the polylactide resin is provided.

The polylactide resin composition which includes the polylactide resin having a high molecular weight is expected to have good physical and mechanical properties and thus may be preferably used for semipermanent applications such as packaging materials for electronic appliances, interior materials for automobiles, and so forth.

Further, the polylactide resin composition which includes the biodegradable polylactide resin may be used to manufacture biodegradable containers or disposable products, such as disposable containers or utensils.

The polylactide resin composition may include the polylactide resin alone or in combination with polycarbonate resin, ABS resin, polypropylene resin, or the like. For a use purpose in such applications as packaging materials for electronic appliances, interior materials for automobiles, or the like, the polylactide resin composition may preferably include, if not specifically limited to, less than about 50 wt% of the polylactide resin, in consideration of potential deterioration in mechanical properties such as durability. For a use purpose in preparation of biodegradable products such as disposable products, the lactide resin composition may preferably include, if not specifically limited to, at least about 60 wt% of the polylactide resin, more preferably at least about 80 wt% of the polylactide resin, and most preferably at least about 90 wt% of the polylactide resin.

The polylactide resin composition may further include various additives that have been previously used in a variety of conventional resin compositions.

Further, the polylactide resin composition may be prepared either as liquid or solid resin compositions prior to being molded into the end product, or as plastics or woven materials in the form of end products. The plastics or woven materials may be prepared by any conventional methods depending on the type of each product.

### BRIEF DESCRIPTION OF THE DRAWINGS

FIG. 1 shows ¹H NMR spectra of tin(II) alkoxide compounds according to synthesis examples of the present invention.
FIG. 2 shows ¹³C NMR spectra of tin(II) alkoxide compounds according to synthesis examples of the present invention.
FIG. 3 shows ¹¹⁹Sn NMR spectra of tin(II) alkoxide compounds according to synthesis examples of the present invention.
FIGS. 4 and 5 are graphs showing the polymerization yield and the molecular weight versus the polymerization time for the comparative results of lactide polymerizations using tin(II) alkoxide catalysts of the synthesis examples and a tin(II) 2-ethylhexanoate catalyst of comparative example 1.

### DETAILED EMBODIMENTS OF THE INVENTION

Hereinafter, the actions and the effects of the present invention will be explained in more detail via specific examples of the invention. However, these examples are merely illustrative of the present invention and the scope of the invention should not be construed to be defined thereby.

### [Synthesis Examples: Synthesis of Tin(II) Alkoxide]

### 1. Experimental Method

The following experiment was carried out in a nitrogen atmosphere using a Schlenk method with a glove box and a vacuum manifold. The nitrogen gas was removed of oxygen with a copper catalyst and of water with drierite (CuS0₄, Aldrich). As for solvents, methanol (MeOH), toluene (PhMe), and diethyl ether (Et₂O) as anhydrous solvents were supplied from Aldrich. All the solvents were purified through an alumina column, dried on a type 4A molecular sieve, and degassed prior to use.

Tin(II) chloride, triethylamine, 1-butanol, 1-hexanol, and 1-octanol were supplied from Aldrich, and I -dodecanol was supplied from TCI. These solvents were immediately used without a separate purification process. C₆D₆ and C₆D₅CD₃ supplied from Cambridge Isotope Laboratories, Inc., were dried on a type 4A molecular sieve and then subjected to distillation under vacuum.

¹H, ¹³C , and ¹¹⁹Sn spectra were acquired with a Bruker AVANCE 400.13 MHz NMR spectrometer at 70 °C and 100 °C for each solvent. The elemental analysis (EA) was performed using an EA1110-FISONS (CE) elemental analyzer.

### 2. Synthesis of Tin(II) Alkoxide (through Intermediate of Tin(II) Methoxide)

The synthesis of a desired tin(II) alkoxide compound was performed in two steps. The first step involved a process of synthesizing Sn(OCH₃)₂ (an intermediate of tin(II) alkoxide) from SnCl₂ using a base in a methanol solvent. 2.01 g (10.6 mmol) of SnCl₂ was dissolved in 100 mL of anhydrous methanol, and an excess of triethylamine (3.25 mL, 23.3 mmol) was then gradually added to the methanol solution under agitation through a syringe. Once a white solid precipitate formed, the solution was stirred at room temperature for about 3 hours. The white precipitate was filtered out, washed with anhydrous methanol and anhydrous diethyl ether, and then dried under vacuum. The product (Sn(OCH₃)₂) thus obtained was stored in a nitrogen atmosphere.

The second step involved a process of adding different alcohols to Sn(OCH₃)₂ to synthesize a desired tin(II) alkoxide compound. This process was conducted through transesterification between Sn(OCH₃)₂ and a primary alcohol.

More specifically, 100 mL of anhydrous toluene was added to Sn(OCH₃)₂ (1.01 g, 5.59 mmol), and an excess of anhydrous primary alcohol (12.3 mmol) was added to the toluene solution through a syringe. Here, the alcohols were 1-butanol for synthesis of tin(II) butoxide, 1-hexanol for synthesis of tin(II) hexoxide, I-octanol for synthesis of tin(II) octoxide, and 1-dodecanol for synthesis oftin(II) dodecoxide.

The slurry thus obtained was fluxed at about 120 °C for 12 hours with vigorous agitation until the white Sn(OCH₃)₂ disappeared to leave the toluene solution clear. The clear toluene solution was gradually cooled to room temperature to obtain a desired tin(II) alkoxide compound as a white crystalline solid, which was then filtered out, dried under vacuum, and stored in a nitrogen atmosphere.

On the other hand, it was possible to prepare the desired products such as tin(II) hexoxide, tin(II) octoxide, etc. in the first step that involved forming intermediates of tin(II) alkoxide from SnCl₂ using a base in solvents such as butanol, octanol, or dodecanol and then reacting the intermediates of tin(II) alkoxide with the respective alcohols such as hexanol, octanol, etc.

### 3. Synthesis of Tin(II) Alkoxide (Direct Reaction between Sn(II) Salt and Alcohol)

A desired tin(II) alkoxide compound was prepared from a direct reaction between tin(II) salt and alcohol in a one-step process.

More specifically, 2.01 g (10.6 mmol) of SnCl₂ was dissolved in 100 mL of anhydrous primary alcohol (1-butanol, I-octanol, or 1-dodecanol, and an excess of triethylamine (3.25 mL, 23.3 mmol) was gradually added to the alcohol solution under agitation through a syringe. Here, the alcohol was 1-butanol for synthesis of tin(II) butoxide, 1-hexanol for synthesis of tin(II) hexoxide, I-octanol for synthesis of tin(II) octoxide, or 1-dodecanol for synthesis of tin(II) dodecoxide. Once a white solid precipitate formed, the alcohol solution was stirred at room temperature for about 18 hours. The white precipitate was filtered out, washed with anhydrous butanol and anhydrous diethyl ether, dried under vacuum, and then stored in a nitrogen atmosphere.

According to the method involving a direct reaction between a tin(II) salt and an alcohol in a one-step process, the yield of the tin(II) alkoxide was at least 80 %, which was higher than the yield of 50 % to 68 % for the tin(II) alkoxide formed from an intermediate, tin(II) methoxide.

Tin(II) butoxide, tin(II) hexoxide, tin(II) octoxide, and tin(II) dodecoxide were synthesized in the same manner as described above, and then identified according to the following experiment.

### 4. Identification of Tin(II) Alkoxide Prepared in Synthesis Examples 2 and 3

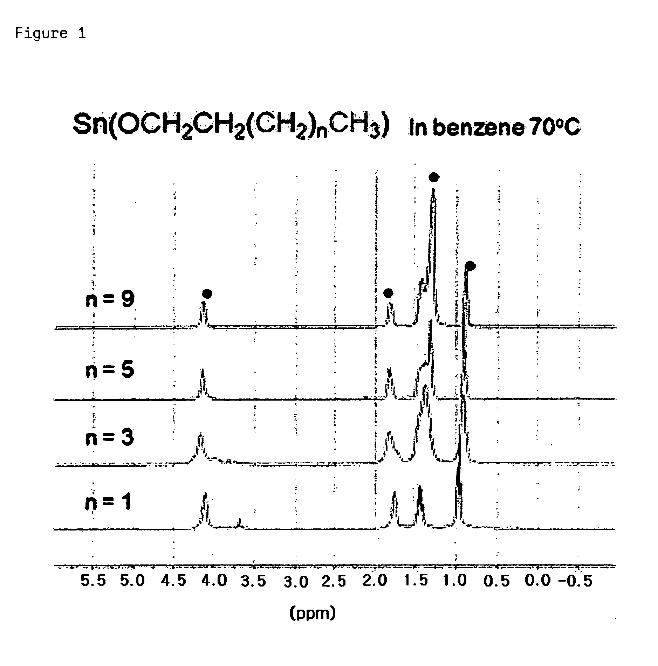

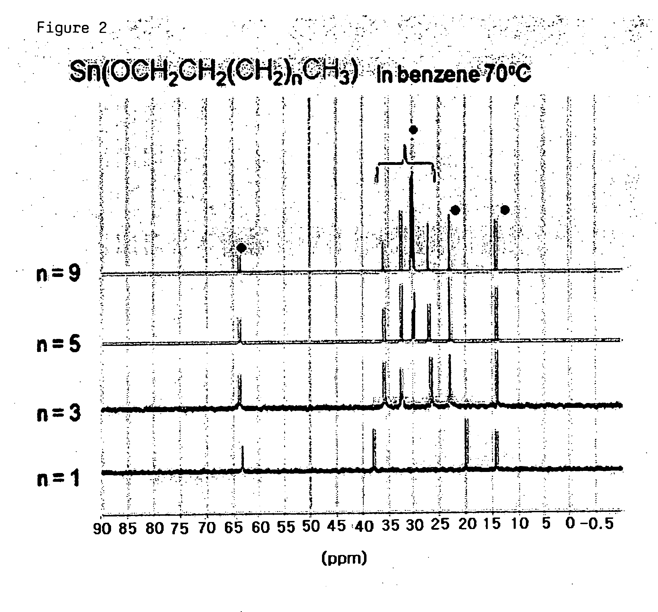

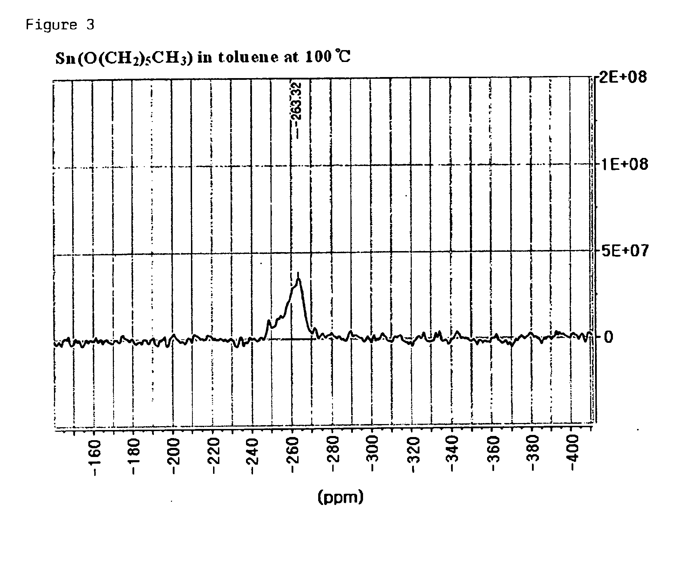

Sn(OCH₂CH₂CH₂CH₃)₂ [tin(II) butoxide] and three novel tin(II) alkoxide compounds (i.e., Sn(OCH₂CH₂(CH₂)ₙCH₃)₂, where n = 3, 5, or 9) were synthesized according to the above-described method and then identified through ¹H, ¹³C, and ¹¹⁹Sn spectroscopic and elemental analyses. The results of the elemental analysis are presented in Table 1, and the ¹H, ¹³C, and ¹¹⁹Sn spectra of those tin(II) alkoxide compounds are shown in FIGS. 1, 2, and 3.

**[Table 1] Results of Elemental Analysis on Organotin Compounds**

| Compound | Structural Formula | Calculation Value | | Analysis Value | |
|---|---|---|---|---|---|
| | | C | H | C | H |
| Tin(II) butoxide | Sn(O(CH₂)₃CH₃)₂ | 36.27 | 6.85 | 35.81 | 6.95 |
| Tin(II) hexoxide | Sn(O(CH₂)₅CH₃)₂ | 44.89 | 8.16 | 44.57 | 7.92 |
| Tin(II) octoxide | Sn(O(CH₂)₇CH₃)₂ | 50.95 | 9.09 | 50.71 | 8.90 |
| Tin(II) dodecoxide | Sn(O(CH₂)₁₁CH₃)₂ | 58.90 | 10.30 | 58.96 | 10.22 |

As can be seen from Table 1 and FIGS. 1, 2, and 3, the synthesis products were identified as pure tin(II) alkoxide compounds.

### Tin(II) butoxide, Sn(OCH₂(CH₂)₂CH₃)₂

Anal. Calcd for C₈H₁₈O₂Sn: C, 36.27 ; H, 6.85. Found : C, 35.81 ; H, 6.95. 1H NMR(C6D6, 70°C)δ 4.10(brs, 4H, OCH₂), 3.68(brs), 1.75(brs, CH₂), 1.44(q, J=20.0, 4H, CH₂), 0.96(t, 4H, J=16.0, CH₃). 13C NMR(C6D6, 70°C) δ 63.22, 37.76, 19.90, 14.14. 119Sn NMR(C₆D₅CD₃, 100°C) δ -261.72(br)

### Tin(II) hexoxide, Sn(OCH₂(CH₂)₄CH₃)₂

Anal. Calcd for C₁₂H₂₆O₂Sn: C, 44.89 ; H, 8.16. Found : C, 44.57 ; H, 7.92. 1H NMR(C6D6, 70°C): δ4.17(brs, 4H, OCH₂), 3.99(brs), 3.82(t), 1.82(brs, 4H, CH₂), 1.38(brs, 12H, CH2), 0.92(brs, 6H, CH3). 13C NMR(C6D6, 70°C): δ63.65, 35.71, 32.40, 26.56, 23.08, 14.08. 119Sn NMR(C₆D₅CD₃, 100°C): δ -263.32(br)

### Tin(II) octoxide, Sn(OCH₂(CH₂)₆CH₃)₂

Anal. Calcd for C₁₆H₃₄O₂Sn: C, 50.95 ; H, 9.09. Found : C, 50.71 ; H, 8.90. 1H NMR(C6D6) : δ4.15(brs, 4H, OCH₂), 1.82(brs), 1.40(brs, 20H, CH₂), 0.90(brs, 6H, CH₃). 13C NMR(C6D6, 70°C) : 63.66, 35.72, 32.29, 30.21, 29.85, 26.96, 22.98, 14.10. 119Sn NMR(C₆D₅CD₃, 100°C) : δ -265.44(br)

### Tin(II) dodecoxide, Sn(OCH₂(CH₂)₁₀CH3)₂

Anal. Calcd for C₂₄H₅₀O₂Sn: C, 58.90 ; H, 10.30. Found : C, 58.96 ; H, 10.22. 1H NMR(C6D6, 70°C) : δ 4.14(brs, 4H, OCH₂), 1.81 (brs), 1.42(brs, 8H, CH₂), 1.29(brs, 32H, CH₂), 0.88(brs, 6H, CH₃). 13C NMR(C6D6, 70°C) : δ 63.65, 35.76, 32.33, 30.35, 30.21, 30.12, 29.77, 27.05, 23.00, 14.16. 119Sn NMR(C₆D₅CD₃, 100 °C) : δ -262.85(br)

### [Experimental Example: Preparation of PLA Using Tin(II) Alkoxide Catalyst of Synthesis Example]

### 1. Experimental Method

The polymers were measured in regard to molecular weight and molecular weight distribution using gel permeation chromatography (GPC). The sample polymer was dissolved in chloroform, passed through a 0.45 µm syringe filter, injected into an instrument, and then analyzed with a polymer lab mixed C&C column and a refractive index (RI) detector (Waters 2414 RI). Here, a polystyrene sample was used as a reference material. The purity of the lactide monomer was 99.5 %. The tin(II) alkoxide catalysts were prepared according to the synthesis examples, and the Sn(Oct)₂ catalyst was supplied from Aldrich. The toluene solvent was purified by distillation in potassium/benzophenone.

### 2. Examples

### (1) Example 1: Polymerization of Polylactide Using Tin(II) Hexoxide Catalyst

2 g (13.8 mmol) of a lactide monomer, tin(II) hexoxide (hereinafter referred to as Sn(OHx)₂) (0.11 wt% toluene solution, 0.1 mL) was put in each of six 30 mL vials, which were then kept under vacuum for about 12 hours. The polymerization reaction was conducted at 180 °C for 2 hours and then interrupted in a defined time. Subsequently, the polymerization yield and the molecular weight were measured using ¹H NMR spectroscopy and GPC. The results are presented in Table 3.

**[Table 3]**

| Polymerization Time (h) | Yield (%) | Mw (e⁻³g/mol) | PDI (M_{w}/Mₙ) |
|---|---|---|---|
| 0.25 | 24 | 109 | 1.22 |
| 0.5 | 42 | 180 | 1.40 |
| 0.75 | 35 | 250 | 1.65 |
| 1 | 65 | 335 | 1.80 |
| 2 | 82 | 410 | 2.04 |

### (2) Example 2: Polymerization of Polylactide Using Tin(II) Octoxide Catalyst

2 g (13.8 mmol) of a lactide monomer, tin(II) octoxide (hereinafter referred to as Sn(OOc)₂) (0.13 wt% toluene solution, 0.1 mL) was put in each of six 30 mL vials, which were then kept under vacuum for about 12 hours. The polymerization reaction was conducted at 180 °C for 2 hours and then interrupted in a defined time. Subsequently, the polymerization yield and the molecular weight were measured using ¹H NMR spectroscopy and GPC. The results are presented in Table 4.

**[Table 4]**

| Polymerization Time (h) | Yield (%) | Mw (e⁻³g/mol) | PDI (M_{w}/Mₙ) |
|---|---|---|---|
| 0.25 | 28 | 120 | 1.18 |
| 0.5 | 47 | 220 | 1.28 |
| 0.75 | 64 | 312 | 1.55 |
| 1 | 73 | 370 | 1.82 |
| 2 | 86 | 435 | 2.09 |

### (3) Example 3: Polymerization of Polylactide Using Tin(II) Dodecoxide Catalyst

2 g (13.8 mmol) of a lactide monomer, tin(II) dodecoxide (hereinafter referred to as Sn(ODd)₂) (0.17 wt.% toluene solution, 0.1 mL) was put in each of six 30mL vials, which were then kept under vacuum for about 12 hours. The polymerization reaction was conducted at 180 °C for 2 hours and then interrupted in a defined time. Subsequently, the polymerization yield and the molecular weight were measured using ¹H NMR spectroscopy and GPC. The results are presented in Table 5.

**[Table 5]**

| Polymerization Time (h) | Yield (%) | Mw (e⁻³g/mol) | PDI (M_{w}/Mₙ) |
|---|---|---|---|
| 0.25 | 35 | 141 | 1.19 |
| 0.5 | 59 | 277 | 1.30 |
| 0.75 | 76 | 368 | 1.60 |
| 1 | 84 | 417 | 1.79 |
| 2 | 92 | 447 | 1.99 |

### 2. Comparative Examples

### (1) Comparative Example 1: Polymerization of Polylactide Using Tin(II) 2-Ethylhexanoate Catalyst

2 g (13.8 mmol) of a lactide monomer, tin(II) 2-ethylhexanoate (0.14 wt.% toluene solution, 0.1 mL) was put in each of six 30 mL vials, which were then kept under vacuum for about 12 hours. The polymerization reaction was conducted at 180 °C for 2 hours and then interrupted in a defined time. Subsequently, the polymerization yield and the molecular weight were measured using ¹H NMR spectroscopy and GPC. The results are presented in Table 6.

**[Table 6]**

| Polymerization Time (h) | Yield (%) | Mw (e⁻³g/mol) | PDI (M_{w}/Mₙ) |
|---|---|---|---|
| 0.25 | 13 | 63 | 1.30 |
| 0.5 | 24 | 109 | 1.39 |
| 0.75 | 38 | 150 | 1.59 |
| 1 | 46 | 215 | 1.81 |
| 2 | 73 | 378 | 2.10 |

### (2) Comparative Example 2: Polymerization of Polylactide Using Tin(II) 2-Butoxide Catalyst

2 g (13.8 mmol) of a lactide monomer, tin(II) butoxide (0.09 wt.% toluene solution, 0.1 mL) was put in each of six 30 mL vials, which were then kept under vacuum for about 12 hours. The polymerization reaction was conducted at 180 °C for 2 hours and then interrupted in a defined time. Subsequently, the polymerization yield and the molecular weight were measured using ¹H NMR spectroscopy and GPC. The results are presented in Table 7.

**[Table 7]**

| Polymerization Time (h) | Yield (%) | Mw (e⁻³g/mol) | PDI (M_{w}/Mₙ) |
|---|---|---|---|
| 0.25 | 17 | 67 | 1.25 |
| 0.5 | 30 | 140 | 1.49 |
| 0.75 | 42 | 180 | 1.58 |
| 1 | 52 | 250 | 1.81 |
| 2 | 77 | 380 | 1.98 |

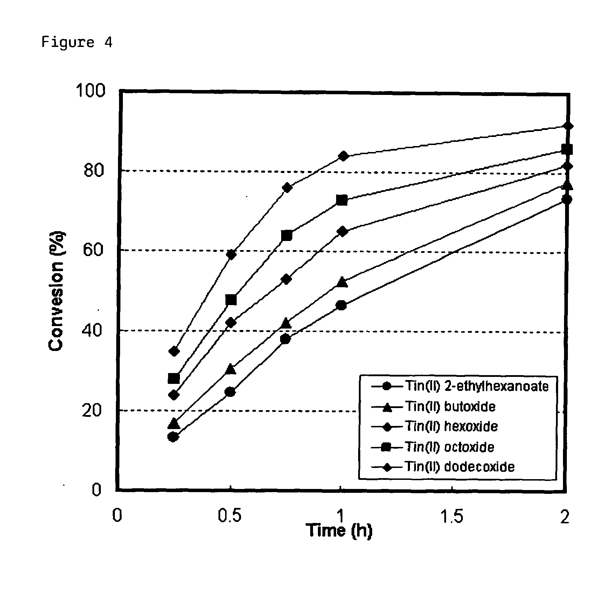

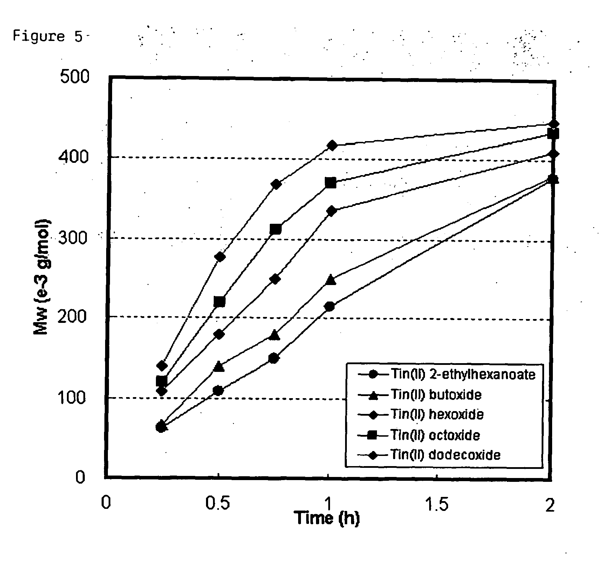

FIGS. 4 and 5 show the results of the polylactide polymerizations according to examples and comparative examples in terms of the changes of the polymerization yield and the molecular weight over the polymerization time. As can be seen from Tables 3 to 7 and FIGS. 4 and 5, the polymerization performance was higher when using the tin(II) alkoxide catalysts having 5 or more carbon atoms in the examples rather than using the tin(II) 2-ethylhexanoate catalyst of Comparative Example 1 or the tin(II) butoxide catalyst of Comparative Example 2 that are used in the conventional polylactide polymerization methods.

The polylactide resin prepared by a 2-hour polymerization reaction had a higher molecular weight when using the tin(II) alkoxide catalysts having 5 or more carbon atoms rather than using the organotin catalysts of Comparative Examples 1 and 2.

Accordingly, the use of the novel organometallic catalyst for preparation of polylactide enables production of polylactide having a high molecular weight at a high yield and is thus useful in the industrial applications related to the preparation of polylactide resins.

## Claims

1. An organotin compound represented by the following Formula I:
R₁O-Sn-OR₂ [Formula 1]
wherein R₁ and R₂ are independently a primary alkyl group, secondary alkyl group, or tertiary alkyl group having 5 to 30 carbon atoms.

2. The organotin compound as claimed in claim 1, wherein the R₁ and R₂ are independently C₆H₁₃, C₈H₁₇, or C₁₂H₂₅.

3. The organotin compound as claimed in claim 1, wherein the organotin compound is Sn(O(CH₂)₅CH₃)₂, Sn(O(CH₂)₇CH₃)₂, or Sn(O(CH₂)₁₁CH₃)₂.

4. The organotin compound as claimed in claim 1, wherein the organotin compound is used as a catalyst for ring-opening polymerization of a cyclic ester compound.

5. The organotin compound as claimed in claim 1, wherein the cyclic ester compound is any one selected from the group consisting of compounds represented by the following Formulas I or II: 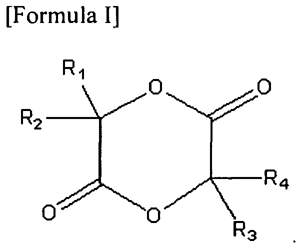 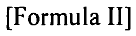 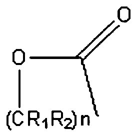 wherein each of R₁, R₂, R₃, and R₄ is the same or different and is hydrogen, or a linear or branched alkyl, alkenyl, or alkynyl having 1 to 12 carbon atoms,
wherein each of R₁, R₂, R₃, and R₄ is independently further substituted with a substituent selected from the group consisting of a halogen, a hydroxyl group, a formyl group, an acyl group, a carboxylic group, and an amino group; and
n is an integer of 2 to 12.

6. The organotin compound as claimed in claim 1, wherein the organotin compound is used as a catalyst for ring-opening polymerization of a lactide monomer to prepare a polylactide resin.

7. A method for preparing an organotin compound, comprising:
reacting a tin(II) salt with a primary, secondary, or tertiary alcohol having 5 to 30 carbon atoms to form an organotin compound represented by the following Formula 1:
R₁O-Sn-OR₂ [Formula 1]
wherein R₁ and R₂ are independently a primary, secondary, or tertiary alkyl group having 5 to 30 carbon atoms.

8. A method for preparing an organotin compound, comprising:
(a) reacting a tin(II) salt with a primary, secondary, or tertiary alcohol having 1 to 12 carbon atoms to form an intermediate of tin(II) alkoxide; and
(b) reacting the intermediate of tin(II) alkoxide with a primary, secondary, or tertiary alcohol having 5 to 30 carbon atoms to form an organotin compound represented by the following Formula I:
R₁O-Sn-OR₂ [Formula 1]
wherein R₁ and R₂ are independently a primary, secondary, or tertiary alkyl group having 5 to 30 carbon atoms.

9. The method as claimed in claim 8, wherein the step (b) of reacting the intermediate of tin(II) alkoxide with a primary, secondary, or tertiary alcohol having 5 to 30 carbon atoms is conducted in an at least one-step reaction process.

10. The method as claimed in claim 7, wherein the step of reacting a tin(II) salt with a primary, secondary, or tertiary alcohol having 5 to 30 carbon atoms is conducted in the presence of a base.

11. The method as claimed in claim 8, wherein the step (a) of forming an intermediate of tin(II) alkoxide is conducted in the presence of a base.

12. The method as claimed in claim 10 or 11, wherein the base is at least one selected from the group consisting of triethylamine, diethylamine, isopropylamine, tributylamine, and ammonia.

13. The method as claimed in claim 7 or 8, wherein the primary, secondary, or tertiary alcohol having 5 to 30 carbon atoms is hexanol, octanol, or dodecanol.

14. The method as claimed in claim 7 or 8, wherein the organotin compound is Sn(O(CH₂)₅CH₃)₂, Sn(O(CH₂)₇CH₃)₂, or Sn(O(CH₂)₁₁CH₃)₂.

15. A method for preparing a polylactide resin, comprising
polymerizing a lactide monomer by ring-opening polymerization in the presence of an organometallic catalyst represented by the following Formula 1:
R₁O-Sn-OR₂ [Formula I]
wherein R₁ and R₂ are independently a primary, secondary, or tertiary alkyl group having 5 to 30 carbon atoms.

16. The method as claimed in claim 15, wherein the organometallic catalyst is used in an amount of 0.001 to 0.1 mole with respect to 100 moles of the lactide monomer.

17. The method as claimed in claim 15, wherein the organometallic catalyst is Sn(O(CH₂)₅CH₃)₂, Sn(O(CH₂)₇CH₃)₂, or Sn(O(CH₂)₁₁CH₃)₂.

18. The method as claimed in claim 15, wherein the ring-opening polymerization is bulk polymerization or solution polymerization.

19. The method as claimed in claim 15, wherein the ring-opening polymerization is conducted at a temperature of 120 to 220 °C.
